# EUROPEAN PATENT APPLICATION

(11) **EP 1 918 767 A1**
(43) Date of publication of application: **07.05.2008**
(21) Application number: 06782355.9
(22) Date of filing: 04.08.2006
(51) Int. Cl.: G02F 1/13357, B60K 35/00

(54) **LIQUID CRYSTAL DISPLAY DEVICE AND INFORMATION DISPLAY DEVICE FOR VEHICLE**

(30) Priority: 04.08.2005 JP 2005226345
(71) Applicant: Nissan Motor Light Truck Co., Ltd, Saitama 362-0046 (JP)
(72) Inventor: SHIGEYOSHI, Eiji c/o NISSAN MOTOR LIGHT TRUCK CO.,, Saitama, 3620046 (JP)
(74) Representative: Fleuchaus, Michael A.
(86) International application number: PCT/JP2006/315497
(87) International publication number: WO 2007/015559

(57) **Abstract**

In a liquid display device 1, a first backlight 5a is disposed to be capable of irradiating a light onto a first irradiated region 8a of a liquid crystal panel 7, and also a second backlight 5b is disposed to be capable of irradiating a light in color which is different from a color of the light irradiated by the first backlight 5a. In the liquid crystal panel 7, a light blocking section 13 that blocks transmission therethrough of the light incident via the first irradiated region 8a or the second irradiated region 8b is disposed between the first and second irradiated regions 8a and 8b.

## Description

### TECHNICAL FIELD

The present invention relates to a liquid crystal display device and a vehicle information display device, and in particular, to a technology for suppressing blurring at color boundaries (it will be hereinbelow referred to as color blur for the simplicity sake) between respective information display sections to thereby improve the display clarity when information in plural numbers is displayed on the screen of a liquid crystal panel using backlights of different colors.

### BACKGROUND ART

A liquid crystal display device has been used as a device for displaying operating states of equipments in various electronics such as a printer, a copy machine and the like. Further, other than this, the liquid crystal display device has been employed in an automobile as a device for displaying vehicle information such as a vehicle speed and so on, and there has been known one, which is assembled in an instrument panel or is disposed on an upper portion of the instrument panel. As one typical liquid crystal display device, there is known one for displaying information, which is provided with a backlight as a light source, and controls the transmission of light via a liquid crystal panel and the blocking of the light transmission. As a vehicle information display device adopting such a transmission type liquid crystal display device, there is known one, which is capable of switching between a positive display format and a negative display format according to a difference of brightness between day and night to improve information visibility corresponding to characteristics of human eyes (refer to patent document 1). Further, there is also known a liquid crystal display device, which is provided with a plurality of backlights disposed to be capable of irradiating lights of different colors onto a rear face of a liquid crystal panel, and also, in order to make information display colors different from one another for each of display sections, is disposed with, on the rear side of the liquid crystal panel, a partition member between the backlights of different emission colors, although this liquid crystal display device is to be applied to the electronics such as the printer and the like (refer to patent document 2).
Patent document 1: Japanese Laid-open (Kokai) Patent Application Publication No. H11 (1999)-212490 (paragraph numbers 0012 and 0013)
Patent document 2: Japanese Laid-open (Kokai) Patent Application Publication No. 2004-258401 (paragraph number 0030)

### DISCLOSURE OF THE INVENTION

### PROBLEMS TO BE SOLVED BY THE INVENTION

In the case where information in plural numbers is displayed on a liquid crystal panel, it is effective for the information display in electronic equipment in general inclusive of a vehicle information display, to make information display colors different from one another between display sections. This is because, due to improvement in visibility, it becomes possible to define a part of information (for example, a warning of fuel shortage or the like). However, if the colors of backlights that constitute light sources are made to be different from each other in order to make the information display colors different between the display sections, such a problem occurs that, on the screen of the liquid crystal panel, the color blur occurs at the boundaries of the colors due to optical scattering between the display sections, resulting in blurry display. Even if the partition member disclosed in the patent literature 2 is disposed, it is impossible to suppress the optical scattering within the liquid crystal panel. In order to solve such a color blur problem, it might be possible to also contrive that a deflection filter is disposed between the liquid crystal panel and the backlights so as to enhance optical directivity within the liquid crystal panel. However, since an increase in a device manufacturing cost is brought about by the addition of deflection filter, it becomes difficult to provide a liquid crystal display device at a low cost.

In order to provide a liquid crystal display device with high display visibility and high display clarity and also at a low cost, it is desired that when the information is displayed using the backlights of different colors, the optical scattering within the liquid crystal panel is suppressed to thereby alleviate generation of the color blur on the screen without the necessity of additional deflection filter.

### MEANS FOR SOLVING THE PROBLEMS

Thus, the present invention aims to provide a liquid crystal display device and a vehicle information display device capable of addressing the above problems.
The present invention is directed to adoption of such a technology that, in a liquid crystal display device, irradiating of lights in different colors onto a rear face of a liquid crystal panel is performed by a plurality of backlights to make information display colors different from one another between a plurality of display sections on the screen. Hence, the device according to the present invention is provided with a first backlight disposed to be capable of irradiating a light onto a first irradiated region formed on the rear face of the liquid crystal panel and a second backlight disposed to be capable of irradiating a light in a color different from that of the light by the first backlight onto a second irradiated region formed on the rear face of the liquid crystal panel. A first display section on which first information is displayed and a second display section on which second information is displayed are formed on the screen of the liquid crystal panel, so that the first information is displayed on the first display section by the irradiation of the light onto the first irradiated region and the second information is displayed on the second display section by the irradiation of the light onto the second irradiated region. Further, a light blocking section for blocking the transmission of the light incident via the first irradiated region or the second irradiated region is disposed between the first and second irradiated regions.

On the other hand, a vehicle information display device according to the present invention is provided with such a liquid crystal display device as described above and a vehicle sensor for providing vehicle information to the liquid crystal display device.

### EFFECTS OF THE INVENTION

According to the present invention, by disposing the light blocking section between the first and second irradiated regions, the transmission of the light incident via the first irradiated region or the second irradiated region is blocked by the light blocking section. Therefore, it is possible to prevent that the lights scattered between the first and second irradiated regions to overlap with each other are transmitted through the liquid crystal panel to appear on the screen. Consequently, it is possible to alleviate generation of the color blur between the first and second display sections to thereby improve the display clarity. Further, since a deflection filter or the like does not need to be disposed for suppressing the color blur, it becomes possible to manufacture a liquid crystal display device with high clarity at a low cost.

The other objects and features of this invention will become understood from the following detailed description with reference to the accompanying drawings.
The entire contents of Japanese Patent Application No. 2005-226345, a priority of which is claimed, are incorporated herein by reference.

### BRIEF DESCRIPTION OF THE DRAWINGS

Fig. 1 is a diagrammatic view illustrating a liquid crystal display device according to one embodiment of the present invention;
Fig. 2 is a cross sectional view of the liquid crystal display device, taken along the line A-A of Fig. 1;
Fig. 3 is a diagrammatic view explaining an operation of a liquid crystal panel in the liquid crystal display device (at transmission or voltage-off time);
Fig. 4 is a diagrammatic view explaining the operation of the liquid crystal panel (at blocking or voltage-on time);
Fig. 5 is a block diagram illustrating a control system for the liquid crystal display device according to one embodiment of the present invention; and
Fig. 6 is a flowchart illustrating contents of control executed by a contents-control CPU for the liquid crystal display device.

### EXPLANATION OF REFERENCE SYMBOLS

1 ... liquid crystal display device, 2 ... base plate, 3 ... separator, 4 ...side cover, 5 ... backlight (5a ... first backlight, 5b ... second backlight), 6 ... diffusion filter, 7 ... liquid crystal panel, 8 ... rear face of liquid crystal panel, 8a ... first irradiated region, 8b ... second irradiated region, 9 ... screen, 9a ... first display section, 9b ... second display section, 13 ... boundary light blocking section as first light blocking section, 14 ...outer edge light blocking section as second light blocking section , 20 ... control unit, 21 ... contents control CPU, 22 ...image memory, 23 ... panel driver, 24 ... backlight driver, 31 ...vehicle speed sensor as vehicle sensor, F1 ... boundary portion frame, F2 ... outer edge portion frame

### BEST MODES FOR CARRYING OUT THE INVENTION

Hereunder, there will be described embodiments of the present invention referring to the drawings.

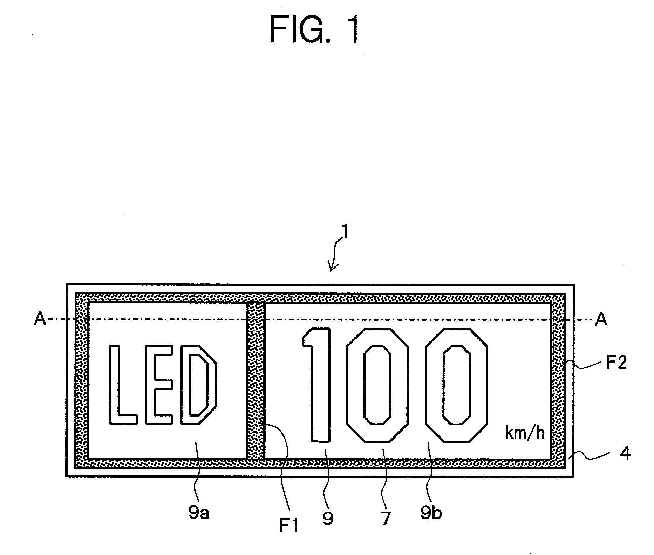

Fig. 1 is a front view illustrating an outer appearance of a liquid crystal display device 1 according to one embodiment of the present invention. The liquid crystal display device 1 according to the present embodiment is to be assembled in an instrument panel disposed to the vehicle interior to configure a vehicle information display device. In the present embodiment, the liquid crystal display device 1 displays character information (herein, the character of "LED") and also a vehicle speed (herein, the indication of "100[km/h]") as vehicle information on the screen 9. It is preferable that the character information has relevance to the vehicle speed in view of easiness of information-gathering for a driver, but another information (for example, residual warning of fuel or the like) which does not have direct relevance to the vehicle speed may be displayed as the character information. The vehicle speed is adopted as a typical driving state relative to the vehicle, but the vehicle information is not limited to the vehicle speed. Incidentally, the liquid crystal display device 1 may be arranged separately from the instrument panel in such a manner that it is mounted on an upper portion of the instrument panel.

In the present embodiment, in the entirety of the screen 9 of a liquid crystal panel 7, a so-called negative display format is adopted so that a light irradiated by a backlight 5 (to be described later) onto a rear face 8 of the liquid crystal panel 7 is transmitted to a portion other than an information indicating portion in each of display sections 9a and 9b on the screen 9. Further, the screen 9 is divided into two display sections so that the character information is displayed on one of the two display sections (namely, "first display section") 9a and the vehicle speed is displayed on the other display section (namely, "second display section") 9b. The first and second display sections 9a and 9b are formed to be juxtaposed to each other on the right and left sides, and for improving clarity, a boundary portion frame F1 by a boundary light blocking section 13 (to be described later) is formed between the display sections 9a and 9b.

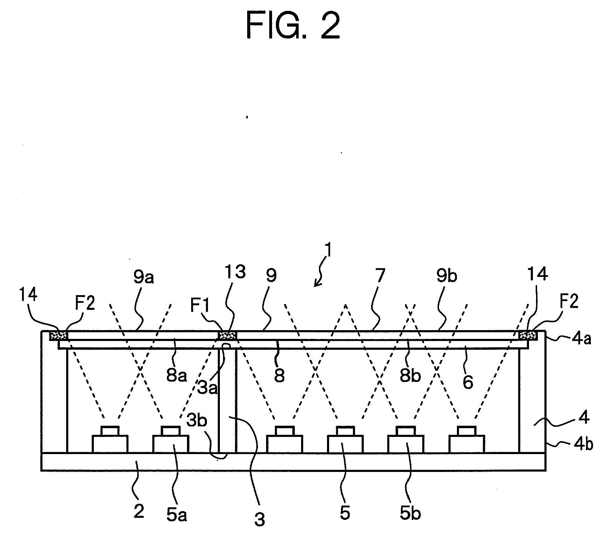

Fig. 2 illustrates the configuration of the liquid crystal display device 1 according to the present embodiment by a cross sectional view taken along the line A-A in Fig. 1. In the present embodiment, the liquid crystal display device 1 includes a base plate 2, a separator 3, a side cover 4 and a diffusion filter 6, other than the liquid crystal panel 7 (to be referred to as "LCD panel" hereunder) forming one screen 9 in the device 1 and a plurality of backlights 5 (5a, 5b) as light sources. The base plate 2 and the side cover 4 make up a housing of the device 1.

The base plate 2 is disposed to extend in parallel to the LCD panel 7 on the rear side of the LCD panel 7, and on the base plate 2, the backlights 5a and 5b are arranged at predetermined intervals and in predetermined distribution so as to irradiate lights onto predetermined irradiated regions 8a and 8b formed on the rear surface 8 of the LCD panel 8.
The side cover 4 is provided for protecting inner parts of the liquid crystal display device 1, such as the back lights 5, the diffusion filter 6 and the like, and is also provided to be in connection with the base plate 2 so as to determine an interval between the LCD panel 7 and the backlights 5. The LCD panel 7 and the diffusion filter 6 are fitted in steps formed on one end 4a of the side cover 4, and also, the base plate 2 is fixed to the other end 4b thereof.

The separator 3 is formed from a light blocking material, and is disposed in contact with the diffusion filter 6 attached to the rear surface 8 of the LCD panel 7 at one end 3a, so as to extend backward from the rear surface 8, while being fixed to the base plate 2 at the other end 3b. The separator 3 is disposed between the first backlight 5a and the second backlight 5b to partition the rear surface 8 of the LCD panel 7 into the first irradiated region 8a to be irradiated by the first backlight 5a and the second irradiated region 8b to be irradiated by the second backlight 5b. A light emitted from the first backlight 5a is irradiated onto the first irradiated region 8a via one part of the diffusion filter 6, whereas a light emitted from the second backlight 5b is irradiated onto the second irradiated region 8b via the other part of the diffusion filter 6. In the present embodiment, each of the first and second backlights 5a and 5b is configured as a group combined by a plurality of single-color light emission diodes (two in the first backlight 5a and four in the second backlight 5b), but may be configured by a light source of multi-color light emission.

On the screen 9 of the LCD panel 7, there are formed the first display section 9a on which information is displayed by the irradiation of light onto the first irradiated region 8a and the second display section 9b on which information is displayed by the irradiation of light onto the second irradiated region 8b. The first and second display sections 9a and 9b make up single screen 9 in the LCD panel 7.
The diffusion filter 6 is for diffusing the lights irradiated by the backlights 5 to substantially unify the light distribution.

within the LCD panel 7, there is disposed a boundary light blocking section (corresponding to "a first light blocking section") 13 for suppressing the color blur between the first and second display sections 9a and 9b due to the light scattering. In the present embodiment, the boundary light blocking section 13 is disposed over the predetermined width (herein, the width same as the width of the separator 3), and blocks the transmission of the light incident via the first irradiated region 8a or the second irradiated region 8b to form a black boundary portion frame F1 (refer to Fig. 1) of the width equivalent to the predetermined width on the screen 9.

In the present embodiment, in addition to the boundary light blocking section 13, on an outer circumferential edge of the LCD panel 7 around the first and second irradiated regions 8a and 8b, there is disposed an outer edge light blocking section (corresponding to "a second light blocking section") 14 configured to be capable of blocking the transmission of the light incident via the first irradiated region 8a or the second irradiated region 8b. The outer edge light blocking section 14 forms an outer edge portion frame F2 (refer to Fig. 1) on the screen 9.

Next, there will be described a configuration of the boundary light blocking section 13 and an operation thereof. Incidentally, in the present embodiment, since the boundary light blocking section 13 and the outer edge light blocking section 14 are in the same configuration, and block the light transmission based on the same principle, hereunder, the configuration and the operation will be described for the boundary light blocking section 13.

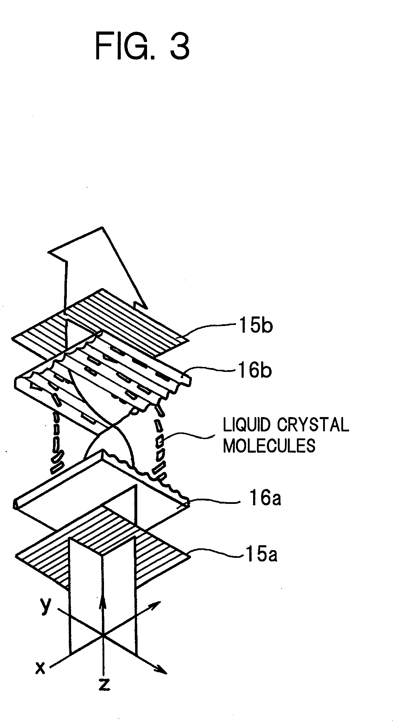

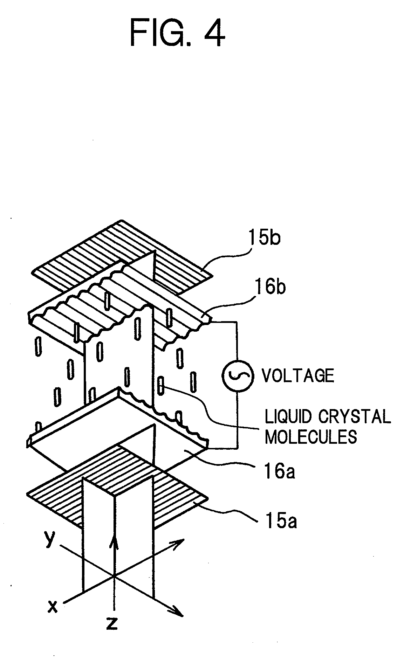

Fig. 3 and Fig. 4 show a concept of frame forming by the boundary light blocking section 13. In the figures, x, y and z indicate optical traveling directions of the lights emitted from the backlights 5.

Fig. 3 shows a voltage-off state in which the light transmission is permitted. In this state, the incident light is transmitted through the boundary light portion 13, and the first and second display sections 9a and 9b make up a consecutive single display section. The LCD panel 7 is a so-called TN type liquid crystal panel, and is formed by placing orientation films 16a and 16b in each of which liquid crystal molecules are filled between a pair of deflection filters 15a and 15b. The boundary light blocking section 13 is for controlling a voltage to be applied on each of the orientation films 16a and 16b to block the light transmission via the liquid crystal molecules, to thereby form the boundary portion frame F1 on the screen 9.

Each of the deflection filters 15a and 15b is a filter configured to permit the light transmission only in one direction, and the one deflection filter 15a is rotated by 90° relative to the other deflection filter 15b. In each of the orientation films 16a and 16b, on an inner surface thereof, fine grooves are formed in parallel to each other. The orientation films 16a and 16b are disposed to be deviated by 90° from each other so that the fine grooves of the orientation film 16a are orthogonal to those of the orientation film 16b. Between the orientation films 16a and 16b, the liquid crystal molecules are aligned in the state where long axes thereof direct in parallel to the grooves. Therefore, when the voltage is not applied on each of the orientation films 16a and 16b, a vector of the light passed through the one deflection filter 15a set to the x-direction is rotated by 90° between the orientation films 16a and 16b due to the alignment of the liquid crystal molecules, to pass through the other deflection filter 15b set to the y-direction. As a result, the light is transmitted through the boundary light blocking section 13, so that a single display section without the boundary portion frame F1 is formed on the screen 9.

Fig. 4 illustrates a voltage-on state in which the light transmission is blocked. In this state, the boundary portion frame F1 is displayed on the screen 9, and the screen 9 is substantially divided into two display sections. By applying the voltage on each of the orientation films 16a and 16b, the liquid crystal molecules are realigned between the orientation films 16a and 16b along an electric field direction. Therefore, the vector of the light passed through the one deflection filter 15a is not rotated between the orientation films 16a and 16b, to be blocked by the other deflection filter 16b. As a result, the light transmission via the boundary light blocking section 13 is blocked so that the boundary portion frame F1 is formed on the screen 9.

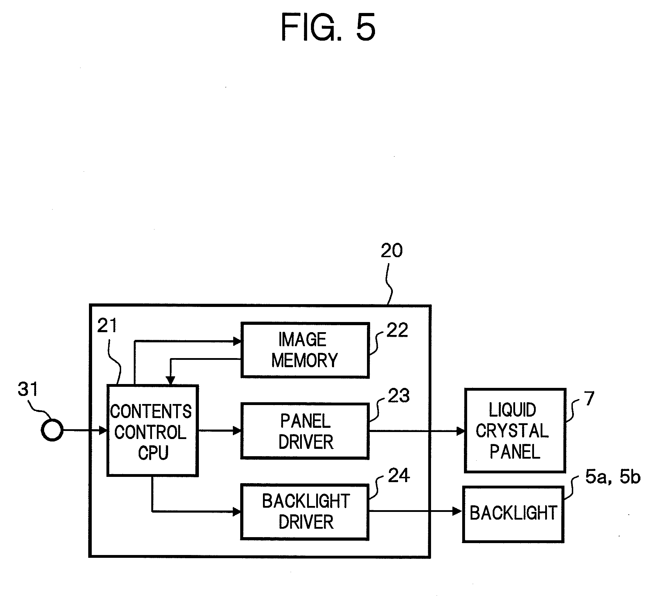

Next, there will be described a configuration of a control system for the liquid crystal display device 1 according to the present embodiment, based on a functional block diagram.
In the functional block diagram shown in Fig. 5, a control unit 20 is for controlling the LCD panel 7 and the backlights 5, receives the vehicle speed as the vehicle information from a vehicle speed sensor 31 and also operates the LCD panel 7 and the backlights 5 in synchronism with each other based on the input vehicle speed.

The control unit 20 includes a contents control CPU (Central Processing Unit) 21, an image memory 22, a panel driver 23 and a backlight driver 24. The panel driver 23 and the backlight driver 24 are integrally controlled by the contents control CPU 21.
The image memory 22 searches image data previously stored therein based on a search command input from the contents control CPU 21. The image data contains data relating to frame display other than data relating to the display of character information and vehicle speed. The image memory 22 outputs the searched image data to the contents control CPU 21.

The panel driver 23 controls the voltage to be applied on the orientation films 16a and 16b of the LCD panel 7 based on a control signal input from the contents control CPU 21, to thereby control the transmission of the light via the LCD panel 7 and the blocking of the light transmission. As a result, the light transmission is blocked at portions of characters of "LED" and numerals of "100[km/h]" and at portions indicating the boundary portion frame F1 and the outer edge portion frame F2, so that on the screen 9, the character information "LED" is displayed in the first display section 9a and the vehicle speed "100[km/h]" is displayed in the second display section 9b, and also, the respective frames F1 and F2 are displayed.

The backlight driver 24 operates the first and second backlights 5a and 5b based on a control signal input from the contents control CPU 21. In the present embodiment, in order to display the character information and the vehicle speed in different colors, a light in first color (for example, red color) is irradiated onto the first irradiated region 8a by the backlight 5a, whereas a light in second color (for example, green color) which is different from the first color, is irradiated onto the second irradiated region 8b by the backlight 5b. The lights emitted from the backlights 5a and 5b are irradiated onto the respective irradiated regions 8a and 8b via the diffusion filter 6.

Next, there will be described an operation of the liquid crystal display device 1 according to the present embodiment based on a flowchart.

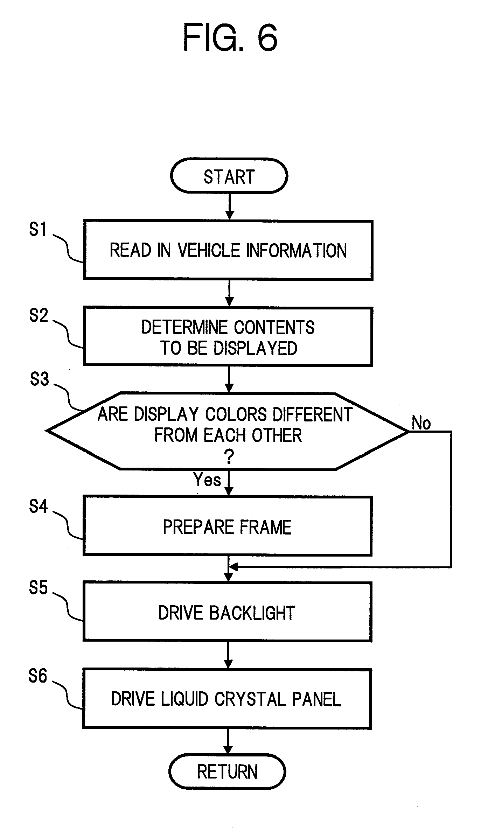

Fig. 6 is a flowchart showing contents of control executed by the contents control CPU 21.
In step S1, the vehicle speed is read as the vehicle information. In the present embodiment, the vehicle speed sensor 31 disposed to be capable of detecting wheel rotating numbers is mounted for detecting the vehicle speed. The detection of vehicle speed can also be performed by taking out a signal for engine control such as target engine rotating numbers or the like.

In step S2, information contents to be displayed on the LCD panel 7 are determined based on the detected vehicle speed. Namely, the character information is determined as "LED" and the vehicle speed is determined as "100[km/h]". In the case where the display color of the character information and the display color of the vehicle speed are made different from each other according to the determined contents, the routine proceeds from step 3 to step 4, where the frames F1 and F2 are prepared. Incidentally, in the present embodiment, the preparation of the frames F1 and F2 is substantially performed by inputting the data relating the frame display as well as the data relating to the display of character information and the like from the image memory 22. Namely, the display color of the information relative to the contents of the character information and the like, and whether or not the frames are to be prepared, are previously determined and stored as the image data. Note, depending on configurations of the image data, data relating to the frame display may be read only when the display colors are made different from each other.

In step S5, the backlights 5a and 5b are driven, so that the first irradiated region 8a of the LCD panel 7 is irradiated by the light in the first color and the second irradiated region 8b thereof is irradiated by the light in the second color.
In step S6, the LCD panel 7 is driven, so that the light transmission via the LCD panel 7 and the blocking is controlled by realigning the liquid crystal molecules, to thereby display the predetermined contents information on the screen 9.
According to the present embodiment described above, following effects can be achieved.

Namely, in the present embodiment, in the case where the boundary light blocking section 13 is disposed between the first and second irradiated regions 8a and 8b so that the information display colors are made different one another between the first and second display sections 9a and 9b, the light transmission via the LCD panel 7 is blocked by the boundary light blocking section 13. Therefore, it is possible to alleviate generation of the color blur between the respective display sections 9a and 9b due to the scattering of the light incident via the first irradiated region 8a or the second irradiated region 8b, to thereby resultantly improve the display clarity. Further, since an additional deflection filter does not need to be disposed for alleviating generation of the color blur, it is possible to suppress a manufacturing cost at low rates. Furthermore, since the boundary portion frame F1 is displayed on the site at which the light is blocked by the boundary light blocking section 13, the information can be defined.

Still further, in the present embodiment, in addition to the boundary portion frame F1, the outer edge portion frame F2 is displayed on the screen 9 by the outer edge light blocking section 14, and therefore, the information displayed on the entirety of the LCD panel 7 can be defined.
Moreover, in the present embodiment, since the boundary portion frame F1 is displayed only when the information display colors are made different between the first and second display sections 9a and 9b, it is possible to curtail the power consumption in the case where generation of the color blur does not occur.

Incidentally, in the present embodiment, the frame is displayed only when the information display colors are made different from one another between the first and second display sections 9a and 9b. However, other than this, the frame may also be displayed in the case where the display colors for the respective display sections 9a and 9b are the same. It is also possible to display only one of the boundary portion frame F1 and the outer edge portion frame F2. For example, in the case where the display colors are the same, by displaying only the outer edge portion frame F2, the visibility of the entirety of the screen 9 can be improved.

Further, the vehicle information may be displayed in a dot format or in a format in which a numeral is divided into seven segments.
Furthermore, in the present embodiment, the vehicle speed is adopted as the vehicle information, but engine rotating numbers or a traveling distance, or other driving states may be adopted as the vehicle information.
Still further, in the present embodiment, the description has been made on the case where the rear surface 8 of the LCD panel 7 is divided into two irradiated regions. However, the rear surface of the LCD panel 7 may be divided into three or more irradiated regions to thereby display more increased information. In this case, it is possible to improve the clarity in the case where more information is simultaneously displayed by making the display color of a part of the information to be different from that of the other parts, and by blocking the light transmission by the boundary light blocking section 13 to thereby alleviate generation of the color blur and also display the boundary portion frame F1.

While the present invention has been described according to preferred embodiments, the scope of the present invention is not limited to this description, and is judged based on the disclosure in the scope of claims in accordance with applied articles.

## Claims

1. A liquid crystal display device comprising:
a liquid crystal panel which forms a screen for information to be displayed;
a first backlight disposed to be capable of irradiating a light onto a first irradiated region formed on a rear face of the liquid crystal panel; and
a second backlight disposed to be capable of irradiating a light in color different from that of the light by the first backlight onto a second irradiated region formed on the rear face of the liquid crystal panel, wherein
the liquid crystal panel includes:
a first display section of the screen, on which first information is displayed by the light irradiation onto the first irradiated region;
a second display section of the screen, on which second information is displayed by the light irradiation onto the second irradiated region; and
a first light blocking section disposed between the first and second irradiated regions, the first light blocking section being configured to block transmission therethrough of the light incident via the first irradiated region or the second irradiated region.

2. A liquid crystal display device according to claim 1, further comprising;
a light blocking separator disposed between the first and second backlights on a rear side of the liquid crystal panel.

3. A liquid crystal display device according to claim 1, further comprising;
a second light blocking section disposed at an outer circumferential edge of the liquid crystal panel around the first and second irradiated regions.

4. A liquid crystal display device according to claim 1, wherein the second backlight is configured to be capable of selectively irradiating the light in first color same as a color of the light irradiated by the first backlight or the light in second color different from the color of the light irradiated by the first backlight, onto the second irradiated region, and
the liquid crystal panel is configured to be capable of switchably transmitting the light via the first light blocking section or blocking this light transmission, and transmits the light via the first light blocking section when the second backlight irradiates the light in first color, while blocking the light transmission when the second backlight irradiates the light in second color.

5. A liquid crystal display device according to claim 1, wherein the first light blocking section is configured to be capable of switchably transmitting the incident light therethrough or blocking this light transmission.

6. A liquid crystal display device according to claim 5, further comprising:
a panel driver connected to the liquid crystal panel, wherein
the liquid crystal panel includes:
a first path formed by liquid crystal molecules, for transmitting the light irradiated onto the first irradiated region to the first display section;
a second path formed by liquid crystal molecules, for transmitting the light irradiated onto the second irradiated region to the second display section; and
a third path formed by liquid crystal molecules in the first light blocking section, for transmitting the light irradiated onto the first or second irradiated region to a third display section of the screen between the first and second display sections, and
the first light blocking section is controlled, when alignment of the liquid crystal molecules forming the third path is controlled by the panel driver, to switch between the transmission of the incident light and the blocking of this light transmission.

7. A liquid crystal display device according to claim 6, further comprising;
an image memory which stores therein control information relating to the alignment of liquid crystal molecules which form the first and second paths and also control information relating to the alignment of liquid crystal molecules which form the third path, and is connected to be capable of transmitting these control information to the panel driver, for the information display on the liquid crystal panel.

8. A liquid crystal display device according to claim 1, wherein the first and second irradiated regions are formed to be juxtaposed to each other with the first light blocking section being positioned therebetween.

9. A liquid crystal display device according to claim 1, wherein the liquid crystal panel is a negative type panel which is configure to transmit a light to a portion other than an information indicating portion in each of the first and second display sections, to thereby display the information.

10. A vehicle information display device comprising:
a vehicle sensor which detects vehicle information; and
a liquid crystal display device recited in claim 1, the liquid crystal display device being connected to the vehicle sensor and displaying the detected vehicle information on the liquid crystal panel thereof.

11. A vehicle information display device according to claim 10, wherein the vehicle sensor detects a vehicle driving state as the vehicle information, and
the liquid crystal panel displays predetermined character information relating to the detected vehicle driving state on the first display section thereof, while displaying the detected vehicle driving state on the second display section thereof.

12. A liquid crystal display device, comprising:
a liquid crystal panel which forms a screen for information;
a plurality of backlights disposed to be capable of irradiating lights onto a rear surface of the liquid crystal panel from the backward of the liquid crystal panel; and
a separator disposed to extend backward from the rear surface of the liquid crystal panel, the separator dividing the rear surface of the liquid crystal panel into a plurality of irradiated regions while partitioning respective irradiated regions onto which the plurality of backlights irradiate the lights respectively, so that at least one of the backlights irradiates the light onto the respective irradiated regions, wherein
the plurality of backlights irradiate the light onto at least one of the plurality of irradiated regions, in color which is different from a color of the light irradiated onto a neighboring irradiated region, and also,
the liquid crystal panel includes therein a light blocking section between the irradiated region onto which the light in different color is irradiated and the other irradiated region juxtaposed thereto.
